# FASCICULE DE BREVET EUROPEEN

(11) **EP 3 121 942 B1**
(45) Date de publication et mention de la délivrance du brevet: **12.09.2018**
(21) Numéro de dépôt: 16180986.8
(22) Date de dépôt: 25.07.2016
(51) Int. Cl.: H02K 7/11, H02K 49/10

(54) **DISPOSITIF DE FREINAGE ET D'IMMOBILISATION D'UN ROTOR D'UNE MACHINE TOURNANTE SYNCHRONE**
BREMS- UND SPERRVORRICHTUNG FÜR DEN LÄUFER EINER SYNCHRONMASCHINE
BRAKING AND LOCKING MEANS FOR A SYNCHRONOUS MACHINE ROTOR

(30) Priorité: 23.07.2015 FR 1555829
(43) Date de publication de la demande: 25.01.2017
(73) Titulaire: BUBENDORFF, 68220 Attenschwiller (FR)
(72) Inventeur: PASQUIER, Patrick, 74300 Cluses (FR); VUARCHEX, Alain, 74970 Marignier (FR)
(74) Mandataire: Littolff, Denis

(56) Documents cités:
- EP-A1- 0 662 569
- EP-A1- 0 783 072
- EP-A2- 2 393 187
- WO-A1-2005/121490
- WO-A1-2014/147612
- JP-A- 2000 083 365
- JP-A- 2004 257 547
- JP-B2- 3 183 409

## Description

La présente invention a trait à un dispositif de freinage et d'immobilisation d'un rotor d'une machine tournante synchrone autopilotée de type moteur sans balai.

Ces moteurs comportent classiquement un stator fixe muni de bobines fonctionnant en électroaimants générant des champs magnétiques statoriques d'amplitudes et de phases variables, fonction de l'alimentation en courant de la bobine. Cette alimentation est en pratique asservie à la position des aimants permanents du rotor, d'où l'autopilotage, et donc à l'orientation des champs magnétiques rotoriques. Des capteurs adéquats (par exemple à effet Hall) détectent à chaque instant la position angulaire précise du rotor, en vue d'en déduire la phase à donner aux champs magnétiques statoriques par les courants d'alimentation (il s'agit en général d'une alimentation triphasée). Les bobines du stator sont en fait alimentées de manière à créer en permanence, sur la périphérie du rotor, des champs magnétiques déphasés, par exemple en quadrature, aux champs magnétiques rotoriques. Le rotor, dont les champs magnétiques cherchent à s'aligner à chaque instant sur les champs magnétiques statoriques, est alors entraîné en rotation, selon le fonctionnement classique des machines électriques tournantes. La quadrature de phase des champs magnétiques assure la création d'un couple moteur maximal.

La régulation de la vitesse de fonctionnement du moteur sans balai s'effectue en modulant l'intensité du courant dans les bobines statoriques. Une augmentation de ladite intensité revient à accélérer la vitesse de rotation du moteur, alors qu'une diminution a l'effet inverse. La modulation de l'intensité des courants d'alimentation permet également la gestion du couple moteur. La commande s'effectue par des moyens de pilotage électronique qui gèrent très schématiquement d'une part les signaux en retour des capteurs détectant la position du rotor et d'autre part la forme et l'intensité des courants d'alimentation des bobines du stator.

La question du freinage de ces moteurs sans balai est la même que pour les moteurs à courant continu avec collecteur, puisqu'en l'absence d'alimentation, un tel moteur n'a en général qu'une capacité de freinage limitée, bien inférieure au besoin réel, qui résulte du « couple de détente » ou « cogging torque ». Lorsque les bobines statoriques cessent d'être alimentées, le moteur freine en fait naturellement également du fait de la charge mécanique qui lui est appliquée, notamment par le réducteur mécanique placé sur l'arbre de transmission couplé au rotor, qui s'analyse en un couple résistant. Ce type de freinage naturel non contrôlé n'est pas satisfaisant et surtout pas suffisant dans nombre d'applications de ces moteurs.

Par comparaison, dans les moteurs électriques asynchrones, le freinage est souvent réalisé de manière électromagnétique par déviation de flux dans au moins une bobine électromagnétique coopérant avec un dispositif de freinage, par exemple un disque prévu à cet effet. Lorsque la ou les bobines en question sont alimentées, les champs magnétiques qu'elles produisent attirent ledit disque de freinage, à l'encontre de moyens ressort, à distance des éléments rotoriques tournants. Lorsqu'ils cessent d'être alimentés, ces moyens ressort sollicitent le disque ou plus généralement les moyens de freinage contre le rotor, et le bloquent.

Le document EP 2 393 187 A2 divulgue une machine électrique équipée d'un frein électromagnétique. Dans les moteurs synchrones autopilotés utilisés dans le cadre de la présente invention, une telle solution n'est pas forcément judicieuse, voire pas réellement utilisable. Dans une application préférentielle de l'invention à la motorisation de volets roulants, dans laquelle un freinage sans qu'il y ait nécessairement blocage peut être mis en oeuvre, le couple de freinage à appliquer est par conséquent variable, pouvant aller jusqu'à deux fois le couple moteur déclaré, la vitesse de descente maximale du volet roulant étant de l'ordre de 150 mm/s.

L'objectif du dispositif de freinage et d'immobilisation de la présente invention est en l'occurrence de dissocier les fonctions, et de ne pas lier la fonction de freinage à celle de commande et d'alimentation des bobines statoriques. S'il demeure vrai que le freinage résulte de l'électronique, dans l'invention, le blocage en est indépendant. En cas de glissement, il est d'ailleurs possible de limiter la descente de la charge en court-circuitant les bobinages de sorte à créer une contre FEM. Le but est cependant toujours d'immobiliser l'arbre moteur en l'absence de courants électriques d'alimentation.

A cet effet, le dispositif de l'invention selon la revendication 1 comporte au moins un premier élément monté fixe par rapport au rotor et au moins un second élément monté fixe par rapport au stator, des moyens de génération de champs magnétiques attachés au premier élément coopérant avec des moyens de génération de champs magnétiques attachés au second élément, lesdits moyens générant des lignes de champs radiales et étant localisés et positionnés respectivement dans le premier et dans le second élément pour que des lignes radiales de même direction et de même sens soient colinéaires dans au moins n (n > 1) positions angulaires discrètes prédéterminées.

L'idée est d'assurer un couple statique qui maintient le rotor en des positions prédéterminées, le freinage complémentaire à celui qui résulte de l'électronique, et l'immobilisation qui en résulte, étant d'autant plus efficaces que le nombre n'est élevé.

Plus précisément, le dispositif de l'invention est configuré de manière telle que :
- une première paroi du premier élément orientée en direction du stator est munie d'au moins une zone à aimantation permanente dont la direction de polarité est orientée radialement par rapport à l'axe de rotation du rotor ;
- une seconde paroi du second élément orientée en direction du rotor est munie d'au moins une zone à aimantation permanente dont la direction de polarité est orientée radialement par rapport à l'axe de rotation du rotor ;
- lesdites première et seconde parois sont positionnées en regard l'une de l'autre, et l'une au moins de ces parois comporte n (n > 1) zones à aimantation permanente ;
- lorsque n > 1, n est pair et les zones à aimantation permanente adjacentes ont un sens de polarisation opposé.

En d'autres termes, l'un des éléments peut comporter une ou plusieurs zones magnétisées radialement, dont les lignes de champs interagissent avec les lignes de champs magnétiques de même direction des zones magnétisées de l'autre élément, le couplage s'effectuant lorsqu'un pôle magnétique de l'un arrive en face d'un pôle magnétique opposé de l'autre. L'immobilisation résulte du caractère statique des champs magnétiques générés dans les deux éléments.

Selon une possibilité, ces zones aimantées peuvent être constitutives du matériau utilisé pour les pièces constituant les éléments du dispositif au sens de l'invention. Alternativement, les zones à aimantation permanente peuvent être réalisées au moyen d'aimants permanents logés dans les parois en regard, dans des emplacements prévus à cet effet.

De préférence, si n > 1, les zones à aimantation permanente ou les aimants permanents sont régulièrement répartis dans les parois qu'ils équipent, de manière à exercer leur fonction de freinage par pas réguliers et à éviter les vibrations parasites. Dans la configuration à aimants permanents, il peut y avoir un calibrage du freinage en fonction du besoin réel en situation, en équipant la périphérie d'un nombre plus ou moins grand d'aimants.

De même, de préférence encore, le nombre de zones à aimantation permanente ou d'aimants permanents équipant chaque paroi est égal, ce qui revient à dire qu'en position immobile, chaque pôle d'un secteur aimanté ou d'un aimant permanent d'un des éléments se retrouve en face d'un pôle opposé d'un secteur aimanté ou d'un aimant permanent de l'autre élément. Les zones d'aimantation permanente peuvent par ailleurs présenter des surfaces polaires en regard sensiblement égales, de manière à optimiser la gestion des flux magnétiques en particulier radiaux.

Plus précisément, selon une configuration possible de l'invention, la première paroi - qui appartient au premier élément - peut être une paroi périphérique externe d'un disque fixé à un arbre de transmission solidarisé au rotor. La seconde paroi peut alors être, selon une configuration correspondante, une paroi périphérique interne d'une portion annulaire en regard du disque, équipant par exemple un carter entourant le stator.

Dans cette hypothèse, le moteur est configuré de telle sorte que le stator entoure le rotor tournant. L'invention couvre cependant également la variante dans laquelle le rotor entoure le stator, l'implantation des parois appartenant aux deux éléments étant alors inversée.

Alternativement, la seconde paroi peut être une paroi périphérique interne d'un capot prévu pour fermer le carter entourant le stator, en sortie de l'arbre de transmission du rotor.

Dans l'hypothèse où les champs magnétiques sont créés par des aimants permanents, les parois peuvent présenter des logements dans lesquels lesdits aimants permanents sont placés. Selon la manière dont ces logements sont organisés, cette solution peut présenter l'avantage de les rendre amovibles, et donc remplaçables, ou de ne pas utiliser la totalité des logements dans l'hypothèse d'un calibrage du freinage. Les aimants peuvent cependant également être surmoulés dans les parois, supprimant l'amovibilité.

En variante, les zones aimantées peuvent résulter **du** matériau de constitution des pièces : les parois peuvent ainsi être réalisées en plastoferrite et présenter des secteurs angulaires à aimantation permanente qui relèvent de la structure même du matériau.

Selon une possibilité, les premier et second éléments sont disposés en sortie de l'arbre de transmission du rotor, dans le prolongement des culasses et pôles magnétiques rotorique et statorique. Le disque étant fixé à l'arbre du rotor, il se situe alors dans le prolongement de ce dernier, et la portion annulaire fixe peut se trouver dans un prolongement du carter.

Par ailleurs, le premier élément, le disque tournant dans l'exemple précité, peut comporter une liaison avec un réducteur mécanique relié à l'arbre de transmission du rotor. Dans cette hypothèse, le dispositif de freinage et d'immobilisation de l'invention se trouve donc du côté du réducteur placé en sortie du moteur, et peut lui être couplé mécaniquement, de telle sorte que le freinage s'effectue même lorsque le réducteur se retrouve mécaniquement séparé du moteur.

L'invention va à présent être décrite plus en détail, en référence aux figures annexées, pour lesquelles :
- la figure 1 représente en vue perspective partielle (avec enlèvement d'un quadrant) un moteur synchrone autopiloté muni d'un dispositif de freinage et d'immobilisation de l'invention selon la variante à aimants permanents amovibles ;
- la figure 2 en montre une vue en élévation de côté, considérée perpendiculairement à l'axe de rotation ;
- la figure 3 illustre en vue perspective partielle une variante de l'invention à secteurs magnétisés prévus dans le matériau constitutif des pièces formant les deux éléments du dispositif de l'invention ;
- la figure 4 individualise lesdites pièces, dans une vue en perspective partiellement éclatée ;
- les figures 5a et 5b montrent ces deux pièces en vue en élévation, et matérialisant les secteurs aimantés ; et
- la figure 6 montre une variante de fabrication de la version apparaissant en figures 3 à 5.

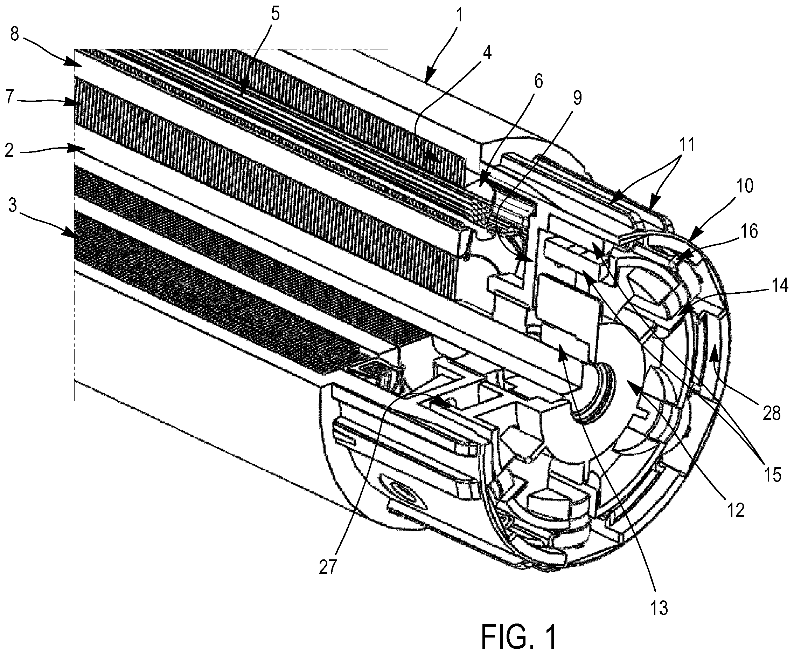

En référence à la figure 1, le moteur synchrone autopiloté comporte un carter (1) entourant d'abord, en direction de l'arbre de transmission (2) central, un stator présentant une culasse magnétique périphérique (4) et des bobines statoriques (5) comportant un enroulement bobiné sur une carcasse (6). Ces bobines (5) sont logées dans des évidements axiaux pratiqués dans un empilement de tôles formant une couronne polaire statorique (3) feuilletée recouverte par la culasse cylindrique (4).

Le rotor comporte un moyeu (7) feuilleté constitué de tôles empilées, et présente sur sa périphérie des aimants permanents (8) en forme de tuiles arrondies épousant sa surface extérieure cylindrique.

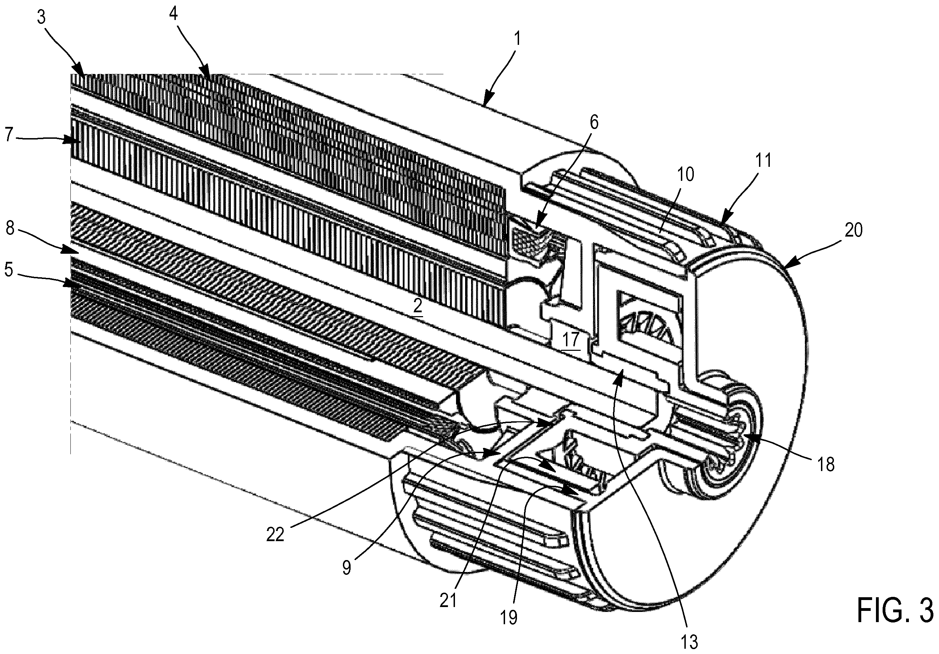

Le carter (1) comprend, dans une portion qui s'étend au-delà du stator et du rotor, un prolongement (10) muni de cannelures (11) extérieures qui loge le dispositif d'immobilisation et de freinage de l'invention. Celui-ci est placé au-delà d'une cloison (9) de liaison du carter à un palier/roulement à billes (non représenté, voir en figure 3), dont la bague extérieure est serrée dans la partie annulaire centrale de cette cloison (9). Le dispositif de l'invention comporte plus précisément, dans cette variante, un disque (12) solidarisé à l'arbre (2) via une bague (13), et dont la couronne périphérique (27) comprend des logements (14) dans lesquels sont placés des aimants permanents (15) en l'espèce sous forme de pastilles circulaires aimantées.

La paroi interne (28) du prolongement (10) du carter (1) comprend également des logements (16) disposés en regard de la couronne périphérique du disque (12) dans lesquels sont logées les mêmes pastilles aimantées (15), le positionnement axial du disque (12) sur l'arbre (2) et périphérique des logements (15, 16) étant prévu tel que lesdites pastilles peuvent être coaxiales, selon des directions radiales, dans un nombre n de positions angulaires correspondant au nombre d'aimants permanents. La forme identique des aimants (15) côté fixe et côté mobile optimise la canalisation des flux magnétiques en particulier radiaux et rend le freinage plus efficace.

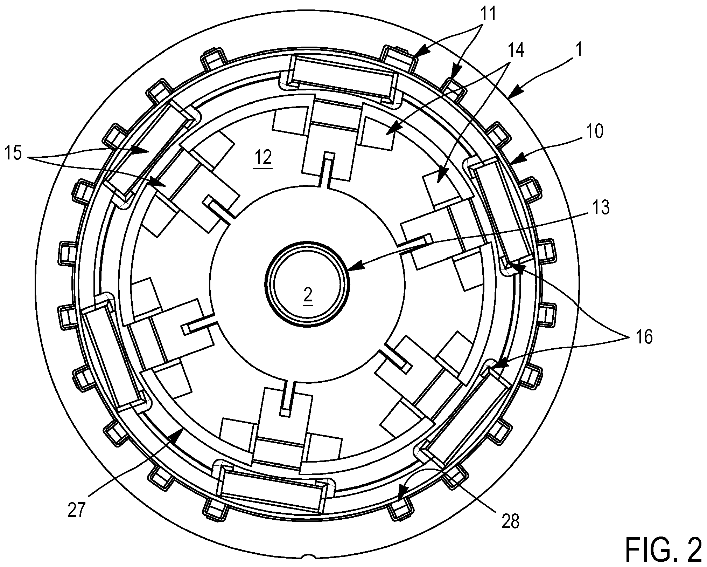

Dans l'exemple illustré aux figures 1 et 2, les aimants sont au nombre de 6, ce qui ne constitue qu'une possibilité, non contraignante. Leur nombre peut d'ailleurs dépendre du matériau utilisé : il est recommandé d'en mettre plus lorsqu'il s'agit de ferrite, alors que c'est moins nécessaire avec des aimants en terres rares qui offrent des meilleurs rendements.

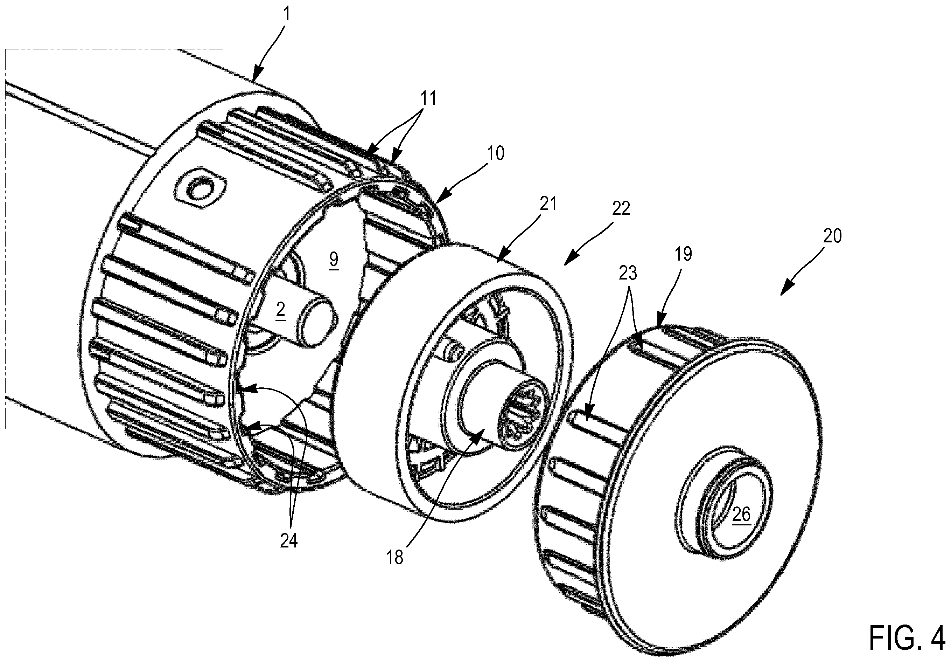

La variante des figures 3 et 4 se différencie de la précédente notamment en trois aspects principaux :
- les aimants permanents ne sont pas dissociés du matériel des éléments/pièces qui forment le dispositif de freinage et d'immobilisation de l'invention ;
- le prolongement (10) du carter (1) n'est plus un des éléments portant une aimantation du dispositif ; et
- le disque magnétique tournant est muni d'une liaison mécanique avec un réducteur (non représenté).

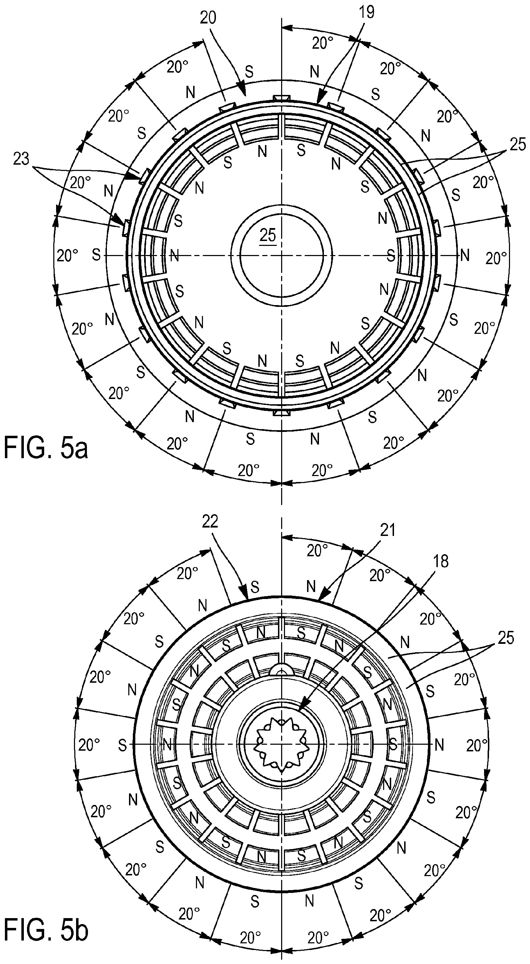

Dans cette configuration, les éléments ou pièces tournante (22) et fixe (20) présentent respectivement une paroi périphérique (21) et (19) d'allure cylindrique qui est en matériau de type plastoferrite magnétisé dans la masse (voir en particulier en figure 4), en des secteurs successifs aimantés (25) de sens de polarisation opposé, comme cela sera montré plus en détail en particulier en référence aux figures 5.

La pièce rotative (22), qui assure la liaison mécanique avec un réducteur, comprend à cet effet un manchon de liaison (18) prolongeant son moyeu central solidarisé, via la bague (13), à l'arbre de transmission (2) du rotor. Comme dans la variante précédente, le dispositif de freinage est placé au-delà de la cloison (9) dont le manchon central entoure un palier/roulement à billes (17), cloison (9) qui le sépare de l'ensemble rotor / stator du moteur.

L'élément fixe (20), en réalité un capot de fermeture, s'insère à l'intérieur du prolongement (10) du carter (1). La face externe de sa paroi périphérique (19) s'ajuste serrée à l'intérieur de la paroi interne de ce prolongement (10). Des cannelures (23) axiales disposées sur ladite face externe de la paroi (19) sont prévues pour coopérer avec des rainures axiales (24) de forme correspondante pratiquées dans la face interne dudit prolongement (10). Ces ensembles de cannelures (23)/rainures (24) permettent un positionnement angulaire précis du capot (20), et agissent de fait en organes de détrompage placés sur la pièce (20). Le positionnement relatif qui en résulte permet la superposition du freinage mis en oeuvre par l'intermédiaire de l'invention et du couple de détente propre au moteur. Le stator de freinage est indexé, grâce à ces cannelures (23) / rainures (24) de sorte que les freinages s'ajoutent. Le manchon de liaison (18) de la pièce (21) demeure par ailleurs accessible au travers du capot (20) par un orifice traversant (26) du capot (20) coaxial à l'arbre de transmission (2).

Les figures 5a et 5b montrent le schéma de magnétisation des parois périphériques (19) du capot (20) en figure 5a, et (21) de la pièce tournante (22) en figure 5b. Selon l'exemple illustré par ces figures, chacun des éléments fixe (20) et mobile (22) du dispositif de l'invention comporte, sur sa paroi périphérique respectivement interne et externe, 18 secteurs angulaires aimantés (25) de sens de polarité successivement inversée. Pour chacun d'eux, les pôles nord (N) et sud (S) sont indiqués sur les figures, et se succèdent bien en alternance. Comme dans la configuration précédente, les secteurs angulaires étant de même angle sur les deux pièces en regard, les surfaces aimantées (25) en regard sont, sinon égales, du moins proches. En cas d'alignement radial, elles sont comprises dans un même secteur angulaire, et la canalisation des lignes de champ est par conséquent optimale dans cette direction, mais également dans une direction tangentielle du fait de l'adjacence des zones aimantées.

Lorsque les bobines (5) du stator ne sont plus alimentées, les champs magnétiques produits par les secteurs magnétisés cherchent à s'aligner, freinant et immobilisant la pièce (22), et donc le rotor. Dans la configuration des figures 3 à 5, le freinage par exemple d'un volet roulant s'effectue même si la rotation n'est plus contrôlée par le moteur, par exemple dans l'hypothèse d'une désolidarisation accidentelle.

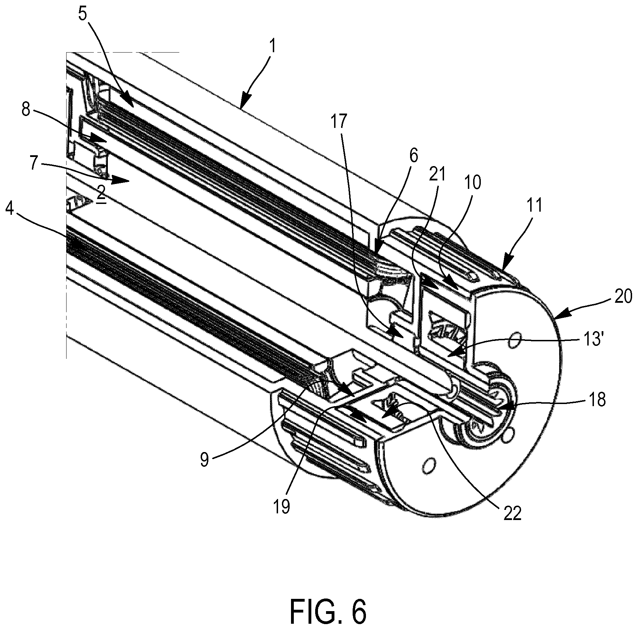

Dans la variante de la figure 6, très proche de la précédente, le manchon de liaison (18) avec le réducteur prolonge et est d'une seule pièce avec la bague (13'), directement insérée sur l'arbre (2). Il est donc directement connecté au réducteur sans liaison avec la pièce (22), beaucoup plus fragile du fait de son matériau constitutif (ferrite).

L'invention ne se limite bien entendu pas aux exemples décrits et expliqués en référence aux figures, mais elle englobe les variantes et versions qui entrent dans la portée des revendications.

## Revendications

1. Dispositif de freinage et d'immobilisation d'un rotor d'une machine tournante synchrone autopilotée de type moteur à courant continu sans balai, comportant au moins un premier élément (12, 22) monté fixe par rapport au rotor et au moins un second élément (10, 20) monté fixe par rapport au stator, des moyens de génération de champs magnétiques (15, 25) attachés au premier élément (12, 22) coopérant avec des moyens de génération de champs magnétiques (15, 25) attachés au second élément (10, 20), lesdits moyens (15, 25) générant des lignes de champs radiales et étant localisés et positionnés respectivement dans le premier (12, 22) et dans le second (10, 20) élément pour que des lignes radiales de même direction et de même sens soient colinéaires dans au moins n (n > 1) positions angulaires discrètes prédéterminées, **caractérisé en ce que** le premier élément (22) comporte une liaison à l'arbre de transmission du rotor via une bague (13, 13') et une liaison avec un réducteur mécanique, sous forme d'un manchon de liaison (18) solidarisé à l'élément (22) ou à la bague (13').

2. Dispositif de freinage et d'immobilisation d'un rotor selon la revendication précédente, **caractérisé en ce qu'**il est séparé du rotor et du stator du moteur par une cloison (9) de liaison d'un carter (1) du moteur à un palier/roulement à billes fixé sur l'arbre (2) du rotor.

3. Dispositif de freinage et d'immobilisation d'un rotor selon la revendication précédente, **caractérisé en ce que** :
- une première paroi (27, 21) du premier élément (12, 22) orientée en direction du stator est munie d'au moins une zone à aimantation permanente (15, 25) dont la direction de polarité est orientée radialement par rapport à l'axe de rotation du rotor ;
- une seconde paroi (28, 19) du second élément (10, 20) orientée en direction du rotor, est munie d'au moins d'une zone à aimantation permanente (15, 25) dont la direction de polarité est orientée radialement par rapport à l'axe de rotation du rotor ;
- lesdites première (27, 21) et seconde (28, 19) parois sont positionnées en regard l'une de l'autre, et l'une au moins de ces parois comporte n (n > 1) zones à aimantation permanente (15, 25) ;
- lorsque n > 1, n est pair et les zones à aimantation permanente (15, 25) adjacentes ont un sens de polarisation opposé.

4. Dispositif de freinage et d'immobilisation d'un rotor selon la revendication précédente, **caractérisé en ce que** les zones à aimantation permanente sont réalisées au moyen d'aimants permanents (15) logés dans les parois (27, 28) en regard.

5. Dispositif de freinage et d'immobilisation d'un rotor selon l'une des revendications 3 et 4, **caractérisé en ce que**, si n>1, les zones à aimantation permanente (25) ou les aimants permanents (15) sont régulièrement répartis dans les parois (19, 21; 27, 28) qu'ils équipent.

6. Dispositif de freinage et d'immobilisation d'un rotor selon la revendication précédente, **caractérisé en ce que** le nombre de zones à aimantation permanente (25) ou d'aimants permanents (15) équipant chaque paroi (19, 21; 27, 28) est égal.

7. Dispositif de freinage et d'immobilisation d'un rotor selon l'une des revendications 3 à 6, **caractérisé en ce que** le zones d'aimantation permanente (15, 25) présentent des surfaces polaires en regard sensiblement égales.

8. Dispositif de freinage et d'immobilisation d'un rotor selon l'une des revendications 3 à 7, **caractérisé en ce que** la première paroi (27) est une paroi périphérique externe d'un disque (12) fixé à un arbre de transmission (2) solidarisé au rotor.

9. Dispositif de freinage et d'immobilisation d'un rotor selon l'une des revendications 3 à 8, **caractérisé en ce que** la seconde paroi (28) est une paroi périphérique interne d'une portion annulaire (10) d'un carter (1) entourant le stator.

10. Dispositif de freinage et d'immobilisation d'un rotor selon l'une des revendications 3 à 8, **caractérisé en ce que** la seconde paroi (19) est une paroi périphérique interne d'un capot (20) prévue pour fermer le carter (1) entourant le stator en sortie de l'arbre de transmission (2) du rotor.

11. Dispositif de freinage et d'immobilisation d'un rotor selon l'une des revendications 8 à 10, **caractérisé en ce que** les parois (27, 28) présentent des logements dans lesquels sont placés des aimants permanents.

12. Dispositif de freinage et d'immobilisation d'un rotor selon l'une des revendications 8 à 10, **caractérisé en ce que** les parois (19, 21) sont réalisées en plastoferrite et présentent des secteurs angulaires (25) à aimantation permanente.

13. Dispositif de freinage et d'immobilisation d'un rotor selon l'une des revendications précédentes, **caractérisé en ce que** les premier (12, 22) et second (10, 20) éléments sont disposés en sortie de l'arbre de transmission (2) du rotor, dans le prolongement des culasses et pôles magnétiques rotorique (7) et statorique (3, 4).

## Patentansprüche

1. Vorrichtung zum Bremsen und Immobilisierung eines Rotors einer selbstgesteuerten synchronen Rotationsmaschine in der Art eines bürstenlosen Gleichstrommotors, umfassend mindestens ein erstes Element (12,22), das relativ zu Rotor ortsfest montiert ist, und mindestens ein zweites Element (10, 20), das relativ zum Stator ortsfest montiert ist, Mittel (15, 25) zur Erzeugung von Magnetfeldern, die an das erste Element (12, 22) angeschlossen sind und mit Mitteln (15, 25) zur Erzeugung von Magnetfeldern zusammenwirken, die an das zweite Element (10, 20) angeschlossen sind, wobei die Mittel (15, 25) Linien radialer Felder erzeugen und jeweils im ersten (12, 22) und zweiten Element (10, 20) derart lokalisiert und positioniert sind, dass radiale Linien derselben Ausrichtung in mindestens (n > 1) einer vorgegebenen diskreten Winkelposition kolinear sind,
**dadurch gekennzeichnet, dass** das erste Element (22) eine Verbindung mit der Antriebswelle des Rotors über eine Buchse (13, 13') sowie eine Verbindung mit einem Getriebemotor in Form einer mit dem Element (22) oder der Buchse (13') integrierten Verbindungsmuffe (18) umfasst.

2. Vorrichtung zum Bremsen und Immobilisierung eines Rotors nach dem vorstehenden Anspruch, **dadurch gekennzeichnet, dass** sie vom Rotor und Stator getrennt ist durch eine Trennwand (9) eines Gehäuses (1) des Motors, die den Motor mit einem auf der Antriebswelle (2) des Rotors befestigten Lager/Kugellagerring verbindet.

3. Vorrichtung zum Bremsen und Immobilisierung eines Rotors nach dem vorstehenden Anspruch, **dadurch gekennzeichnet, dass** :
- eine erste Wand (27, 21) des ersten Elements (12, 22), die in Richtung des Stators ausgerichtet ist, mit mindestens einem Dauermagnetisierungsbereich (15, 25) ausgestattet ist, dessen Polarität radial zur Rotationsachse des Rotors ausgerichtet ist;
- eine zweite Wand (28, 19) des zweiten Elements (10, 20), die in Richtung des Rotors ausgerichtet ist, mit mindestens einem Dauermagnetisierungsbereich (15, 25) ausgestattet ist, dessen Polarität radial zur Rotationsachse des Rotors ausgerichtet ist;
- wobei die erste (27, 21) und zweite (28, 19) Wand einander zugewandt sind und mindestens eine der Wänder n (n > 1) Dauermagnetisierungsbereiche (15, 25) aufweist;
- wenn n > 1, ist n eine gerade Zahl und die benachbarten Dauermagnetisierungsbereiche (15, 25) weisen entgegengesetzte Polaritäten auf.

4. Vorrichtung zum Bremsen und Immobilisierung eines Rotors nach dem vorstehenden Anspruch, **dadurch gekennzeichnet, dass** die Dauermagnetisierungsbereiche mit Dauermagneten (15) ausgebildet sind, die einander zugewandt in den Wänden (27, 28) angeordnet sind.

5. Vorrichtung zum Bremsen und Immobilisierung eines Rotors nach einem der Ansprüche 3 und 4, **dadurch gekennzeichnet, dass**, wenn n>l, die Dauermagnetisierungsbereiche (25) bzw. die Dauermagneten (15) regelmäßig in den Wänden (19, 21; 27, 28) verteilt sind, in denen sie vorgesehen sind.

6. Vorrichtung zum Bremsen und Immobilisierung eines Rotors nach dem vorstehenden Anspruch, **dadurch gekennzeichnet, dass** die Anzahl der Dauermagnetisierungsbereiche (25) bzw. Dauermagneten (15) in jeder Wand (19, 21; 27, 28) gleich ist.

7. Vorrichtung zum Bremsen und Immobilisierung eines Rotors nach einem der Ansprüche 3 - 6, **dadurch gekennzeichnet, dass** die Dauermagnetisierungsbereiche (15, 25) im Wesentlichen gleiche, einander zugewandte polare Oberflächen aufweisen.

8. Vorrichtung zum Bremsen und Immobilisierung eines Rotors nach einem der Ansprüche 3-7, **dadurch gekennzeichnet, dass** die erste Wand (27) eine äußere Umfangswand einer Scheibe (12) ist, die auf einer mit dem Rotor integrierten Antriebswelle (2) fixiert ist.

9. Vorrichtung zum Bremsen und Immobilisierung eines Rotors nach einem der Ansprüche 3-8, **dadurch gekennzeichnet, dass** die zweite Wand (28) eine innere Umfangswand eines ringförmigen Abschnitts (10) eines Gehäuses (1) ist, das den Stator umgibt.

10. Vorrichtung zum Bremsen und Immobilisierung eines Rotors nach einem der Ansprüche 3-8, **dadurch gekennzeichnet, dass** die zweite Wand (19) eine innere Umfangswand einer Haube (20) zum Abschließen des Gehäuses (1) am Ausgang der Antriebswelle (2) des Rotors ist.

11. Vorrichtung zum Bremsen und Immobilisierung eines Rotors nach einem der Ansprüche 8 - 10, **dadurch gekennzeichnet, dass** die Wände (27, 28) Gehäuse aufweisen, in denen Dauermagneten angeordnet sind.

12. Vorrichtung zum Bremsen und Immobilisierung eines Rotors nach einem der Ansprüche 8 - 10, **dadurch gekennzeichnet, dass** die Wände (19, 21) aus Plastoferrit bestehen und gewinkelte Dauermagnetisierungssektoren (25) aufweisen.

13. Vorrichtung zum Bremsen und Immobilisierung eines Rotors nach einem der vorstehenden Ansprüche, **dadurch gekennzeichnet, dass** das erste (12, 22) und zweite (10, 20) Element am Ausgang der Antriebswelle (2) des Rotors in einer Verlängerung der Zylinderköpfe und der Magnetpole des Rotors (7) und des Stators (3, 4) angeordnet sind.

## Claims

1. A device for braking and immobilizing a rotor of a brushless DC self-controlled synchronous rotating machine, including at least one first element (12, 22) mounted stationary relative to the rotor and at least one second element (10, 20) mounted stationary relative to the stator, means for generating magnetic fields (15, 25) attached to the first element (12, 22) cooperating with means for generating magnetic fields (15, 25) attached to the second element (10, 20), said means (15, 25) generating radial field lines and being located and positioned respectively in the first (12, 22) and in the second (10, 20) element so that radial lines with a same direction and sense are co-linear in at least n (n > 1) predetermined discrete angular positions, **characterized in that** the first element (22) includes a link to the transmission shaft of the rotor via a ring (13, 13') and a connection with a mechanical reducing gear, in the form of a connecting sleeve (18) secured to the element (22) or to the ring (13').

2. The device for braking and immobilizing a rotor according to the preceding claim, **characterized in that** it is separated from the rotor and the stator of the motor by a partition (9) for connecting a casing (1) of the motor to a bearing/ball bearing fixed on the shaft (2) of the rotor.

3. The device for braking and immobilizing a rotor according to the preceding claim, **characterized in that**:
- a first wall (27, 21) of the first element (12, 22) oriented toward the stator is provided with at least one permanent magnetization zone (15, 25), the polarity direction of which is oriented radially relative to the rotation axis of the rotor;
- a second wall (28, 19) of the second element (10, 20) oriented toward the rotor is provided with at least one permanent magnetization zone (15, 25), the polarity direction of which is oriented radially relative to the rotation axis of the rotor;
- said first (27, 21) and second (28, 19) walls are positioned across from one another, and at least one of these walls includes n (n > 1) permanent magnetization zones (15, 25);
- when n > 1, n is even and the adjacent permanent magnetization zones (15, 25) have an opposite polarization direction.

4. The device for braking and immobilizing a rotor according to the preceding claim, **characterized in that** the permanent magnetization zones are made using permanent magnets (15) housed in the opposite walls (27, 28).

5. The device for braking and immobilizing a rotor according to one of claims 3 and 4, **characterized in that**, if n>1, the permanent magnetization zones (25) or the permanent magnets (15) are regularly distributed in the walls (19, 21; 27, 28) that they equip.

6. The device for braking and immobilizing a rotor according to the preceding claim, **characterized in that** the number of permanent magnetization zones (25) or permanent magnets (15) equipping each wall (19, 21; 27, 28) is equal.

7. The device for braking and immobilizing a rotor according to one of claims 3 to 6, **characterized in that** the permanent magnetization zones (15, 25) have substantially equal opposite polar surfaces.

8. The device for braking and immobilizing a rotor according to one of claims 3 to 7, **characterized in that** the first wall (27) is an outer peripheral wall of a disc (12) fastened to a transmission shaft (2) secured to the rotor.

9. The device for braking and immobilizing a rotor according to one of claims 3 to 8, **characterized in that** the second wall (28) is an inner peripheral wall of an annular portion (10) of a casing (1) surrounding the stator.

10. The device for braking and immobilizing a rotor according to one of claims 3 to 8, **characterized in that** the second wall (19) is an inner peripheral wall of a cover (20) provided to close the casing (1) surrounding the stator at the output of the transmission shaft (2) of the rotor.

11. The device for braking and immobilizing a rotor according to one of claims 8 to 10, **characterized in that** the walls (27, 28) have housings in which permanent magnets are placed.

12. The device for braking and immobilizing a rotor according to one of claims 8 to 10, **characterized in that** the walls (19, 21) are made from plastoferrite and have angular sectors (25) with permanent magnetization.

13. The device for braking and immobilizing a rotor according to one of the preceding claims, **characterized in that** the first (12, 22) and second (10, 20) elements are arranged at the output of the transmission shaft (2) of the rotor, in the extension of the rotor heads and rotor (7) and stator (3, 4) magnetic poles.
